# FASCICULE DE BREVET EUROPEEN

(11) **EP 3 394 401 B1**
(45) Date de publication et mention de la délivrance du brevet: **29.09.2021**
(21) Numéro de dépôt: 16826089.1
(22) Date de dépôt: 12.12.2016
(51) Int. Cl.: F01D 25/16, F01D 25/24, F01D 25/28, F02K 3/06, F02C 7/20

(54) **TURBORÉACTEUR AVEC UN MOYEN DE REPRISE DE POUSSÉE SUR LE CARTER INTER-COMPRESSEURS**
TURBOSTRAHLTRIEBWERK MIT SCHUBAUFNAHME AN DEM VERDICHTERZWISCHENGEHÄUSE
TURBOJET ENGINE WITH THRUST TAKE-UP MEANS ON THE INTER-COMPRESSOR CASE

(30) Priorité: 24.12.2015 FR 1563323
(43) Date de publication de la demande: 31.10.2018
(73) Titulaire: Safran Aircraft Engines, 75015 Paris (FR)
(72) Inventeur: BRAULT, Michel, Gilbert, Roland, 77550 Moissy Cramayel (FR); BORDONI, Nils, Edouard, Romain, 77550 Moissy Cramayel (FR); CUVILLIER, Romain, Guillaume, 77550 Moissy Cramayel (FR); KUBIAK, Guillaume, Patrice, 77550 Moissy Cramayel (FR); NEGRI, Arnaud, Nicolas, 77550 Moissy Cramayel (FR); NOWAKOWSKI, Nathalie, 77550 Moissy Cramayel (FR)
(74) Mandataire: Gevers & Orès
(86) Numéro de dépôt international: PCT/FR2016/053345
(87) Numéro de publication internationale: WO 2017/109330

(56) Documents cités:
- EP-A1- 1 564 397
- EP-A2- 2 592 235
- CA-A1- 2 929 947
- US-A1- 2008 098 717
- US-A1- 2012 195 753

## Description

### Domaine de l'invention

La présente invention concerne le domaine de la propulsion aéronautique. Elle porte sur la suspension d'un turboréacteur à un aéronef et plus particulièrement sur l'agencement des moyens assurant la transmission ou la reprise de la poussée fournie par le moteur à la structure de l'aéronef.

### Etat de la technique

L'état de la technique comprend notamment les documents US-A1-2012/195753, EP-A2-2 592 235, US-A1 -2008/098717, EP-A1-1564397 et CA-A1-2929 947.

Un turboréacteur multiflux conforme à une architecture connue de l'art antérieur comprend, d'amont en aval dans le sens du flux d'air le traversant, une soufflante et un générateur de gaz par lequel il est entraîné en rotation. Ce dernier est formé d'au moins un compresseur, une chambre de combustion annulaire, au moins une turbine et une tuyère d'éjection des gaz de combustion. L'air comprimé par la soufflante est divisé en deux flux concentriques : un flux primaire central alimentant le générateur de gaz et un flux secondaire entourant ce dernier. Les deux flux peuvent être éjectés dans l'atmosphère séparément par des tuyères concentriques ou bien être mélangés en aval du générateur de gaz et éjectés dans l'atmosphère à travers une tuyère commune.

Le générateur de gaz est un moteur à turbine à gaz multi-corps, par exemple à double corps, avec deux rotors indépendants coaxiaux. Un premier corps à basse pression comprend un compresseur et une turbine, reliés par un premier arbre, un second corps à haute pression comprend un compresseur et une turbine reliés par un second arbre coaxial au premier. La chambre de combustion est alimentée par l'air comprimé successivement par la soufflante, le compresseur à basse pression, BP, et le compresseur à haute pression, HP. Les gaz issus de la combustion sont détendus successivement dans la turbine à haute pression, HP, puis dans la turbine à basse pression, BP, avant d'être éjectés dans l'atmosphère par la tuyère aval. Les turbines mises en mouvement par les gaz de combustion entraînent en rotation les compresseurs respectifs et la soufflante dont l'arbre est relié à celui de la turbine à basse pression, BP. La soufflante peut être entraînée directement par l'arbre du corps BP mais selon une évolution des moteurs, par l'intermédiaire d'un réducteur de vitesse lorsque sont visés des taux de dilution élevés, c'est à dire un rapport du flux secondaire sur le flux d'air primaire élevé. En effet, dans les turboréacteurs conventionnels avec une turbine liée directement à la soufflante, les taux de dilution sont limités notamment par la vitesse périphérique en tête des aubes de soufflante. Les architectures comprenant une turbosoufflante entraînée par l'intermédiaire d'un réducteur de vitesse avec un taux de dilution très élevé - ou en anglais UHBR (ultra high bypass ratio) - répondent partiellement à ce problème en optimisant l'efficacité de la turbine à un régime de soufflante modéré.

Outre les rotors, le moteur comprend des organes statoriques pour assurer notamment les fonctions de support, de guidage des flux et de transmission des efforts.

Dans les turboréacteurs à double flux, une grande partie de la poussée est réalisée par le flux secondaire. La force de traction exercée par l'air ambiant sur le moteur s'applique en partie sur les aubes de soufflante, en partie sur les parois de tuyère. Le chemin des efforts depuis la soufflante est le suivant : les efforts axiaux appliqués sur les aubes de soufflante sont transmis par un palier de butée vers les parties fixes du moteur, puis remontés vers les suspensions du moteur que sont en particulier les deux bielles de reprise de poussée. Ces bielles sont communément situées dans la zone inter-veines, et les chapes de fixation des bielles sont angulairement positionnées à environ 45° du plan vertical. Il s'agit ici de la reprise des efforts axiaux de la poussée créée par la soufflante. Les autres efforts : reprise de couple ou efforts sur les axes transversaux suivent des chemins différents qui ne sont pas concernés par la présente demande de brevet.

Dans cette architecture, les efforts axiaux passent par le carter intermédiaire ou inter-compresseurs avant d'être transmis à la suspension.

Sur un moteur à réducteur de vitesse entre l'arbre de turbine et celui de la soufflante, avec les architectures à taux de dilution élevé, UHBR cité plus haut, le chemin des efforts est agencé différemment.

Dans ce type d'architecture, le moteur comprend en plus du carter inter-compresseurs, un carter d'entrée situé entre la soufflante et le compresseur BP de manière à pouvoir supporter le poids du réducteur et les paliers. Le carter d'entrée est ainsi conçu pour supporter directement le réducteur, par exemple à train d'engrenages épicycloïdal. La présence du carter d'entrée a pour conséquence que la soufflante et l'arbre BP ne sont plus supportés par le carter inter-compresseurs mais par le carter d'entrée. Il s'ensuit que le carter d'entrée reprend également les efforts axiaux de l'arbre de soufflante par le palier qui supporte l'arbre de soufflante et les efforts axiaux de l'arbre BP par le palier de l'arbre BP. Il est à noter que les deux paliers sont choisis de manière à former des butées axiales et absorber les charges axiales. Des paliers à billes conviennent pour assurer cette fonction mais aussi d'autres paliers conviennent également. Par exemple, le rotor de soufflante peut être supporté par un palier à double rouleaux coniques qui vient en substitution d'un palier à rouleaux et d'un palier à billes tels que couramment employés.

Les bielles de reprise de poussée sont, quant à elles, de préférence maintenues attachées au carter inter-compresseurs, car leur montage sur le carter d'entrée ne serait pas avantageux. Pour cela il faudrait prévoir une extension de l'espace dans la zone inter-veines nécessaire à leur intégration. La longueur des bielles en serait accrue avec un impact sur leur masse. Par ailleurs, la raideur des bielles serait à augmenter pour éviter les modes vibratoires. Enfin, leur intégration dans la zone du carter d'entrée viendrait en conflit avec l'installation des équipements, tels que le réservoir d'huile, la vanne de décharge et l'anneau de synchronisation de la commande des ailettes de stator à calage variable du compresseur.

Dans une telle architecture, les efforts axiaux passent ainsi par le carter d'entrée puis jusqu'au carter inter-compresseurs par le compresseur BP qui est interposé entre les deux carters. Cela n'est pas sans conséquence : le carter du compresseur BP a en soi une faible tenue mécanique et les efforts axiaux correspondant à la reprise de poussée sur ce carter sont susceptibles de le déformer avec pour effet, d'un côté, une augmentation des jeux en tête d'aube et une perte de rendement et, de l'autre côté, une diminution des jeux en tête d'aube et un risque de contact rotor/stator.

La faible tenue mécanique du carter du compresseur BP peut-être compensée par un épaississement de celui-ci pour un même matériau avec pour conséquence une masse plus importante. Cependant, tant que des efforts y transitent, des déformations peuvent être observées avec les conséquences citées ci-dessus.

La présente invention a pour objectif de remédier à cet inconvénient.

### Exposé de l'invention

On parvient à réaliser cet objectif, avec un turboréacteur multiflux comprenant les caractéristiques de la revendication 1.

La solution de l'invention consiste donc à dissocier la fonction structurale du carter du premier compresseur de celle de paroi extérieure de la veine d'air primaire. La virole structurale a pour fonction de transmettre les efforts entre les deux carters. En étant flottant, le carter du premier compresseur, formant la paroi de veine d'air, ne transmet aucune charge à travers lui. En particulier le carter formant une paroi de veine, est relié de manière flottante à l'un des deux carters d'entrée et inter-compresseurs par une liaison à jeu.

Ainsi par ce dispositif, d'une part, on s'affranchit de l'obligation de renforcer le carter du compresseur, d'autre part on élimine les efforts sur le carter susceptibles de causer des déformations affectant le rendement du compresseur.

Par ailleurs, le dispositif permet de reprendre tous les efforts appelés à transiter entre les carters. Il s'agit des
- efforts axiaux correspondant à la reprise de la poussée,
- des efforts tranchants que sont le poids du moteur ou les efforts inertiels du corps HP suspendu à ses extrémités,
- le couple de torsion sur l'axe moteur,
- le couple de flexion résultant du poids ou des efforts inertiels du corps HP suspendu à ses extrémités.

La reprise des efforts autres qu'axiaux permet d'améliorer la situation mécanique du moteur, en limitant par exemple la déformation du corps HP.

Conformément à un mode de réalisation, la virole structurale d'efforts est rapportée sur le carter d'entrée auquel elle est soudée. Elle est boulonnée en aval sur le carter inter-compresseurs.

Selon une variante de réalisation, la virole structurale d'efforts est rapportée en étant boulonnée à la fois sur le carter d'entrée et sur le carter inter-compresseurs.

Lorsque le carter d'entrée comprend une virole VSV (acronyme de l'anglais *Variable Stator Vane*) supportant des ailettes de stator à calage variable, ladite virole VSV est pourvue de nervures longitudinales de renfort.

Conformément à une autre caractéristique, le carter du compresseur flottant est relié à l'un des deux carters d'entrée et inter-compresseurs avec une liaison flottante à jeu axial. Il présente en outre de préférence un jeu radial. De préférence la liaison comprend une première bride recouvrant avec jeu une seconde bride.

Egalement pour éviter toute fuite d'air, la liaison flottante comprend un joint d'étanchéité, isolant une veine primaire de l'air ambiant.

De préférence comme cela est décrit dans la demande de brevet FR A 3 007 458, le carter inter-compresseurs comprend deux flasques radiaux disposés transversalement par rapport à l'axe, les deux flasques étant reliés par des nervures orientées dans l'axe. Plus particulièrement le carter inter-compresseurs comprend des bras traversant une veine primaire, lesdites nervures sont situées dans le prolongement desdits bras. Avantageusement les moyens d'attache des bielles de reprise de poussée sont fixés à l'un des deux flasques.

Enfin, cette solution permet de faire transiter tout type d'effort, en limitant l'encombrement du dispositif pour laisser suffisamment de place aux équipements situés au dessus du compresseur BP.

L'invention vise en particulier un turboréacteur dont la soufflante est entraînée par une turbine BP et qui comprend un réducteur de vitesse entre un arbre de la turbine BP et la soufflante. Le réducteur est par exemple constitué d'un train d'engrenages épicycloïdal. Le carter d'entrée est disposé de manière à former un support du mécanisme réducteur de vitesse. Au moins une partie des paliers supportant l'arbre de soufflante et l'arbre BP, respectivement, dans le carter d'entrée sont aptes à former des butées axiales.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés.

Sur ces dessins :
La figure 1 représente schématiquement en coupe axiale un exemple d'architecture de moteur, conforme à l'invention ;
Les figures 2 et 3 représentent en perspective un carter inter-compresseurs seul, vu depuis l'aval et de côté;
La figure 4 est une vue partielle d'un moteur, en coupe axiale illustrant un mode de réalisation de l'invention avec une virole structurale d'effort;
La figure 5 montre le détail d'une liaison du carter flottant au carter d'entrée ;
La figure 6 montre une variante de réalisation de l'invention par rapport à celle de la figure 4;
La figure 7 montre une autre variante de réalisation de l'invention avec une virole structurale boulonnée;
La figure 8 montre, vu en perspective, le détail de la virole des ailettes VSV renforcée par des nervures longitudinales.

### Description détaillée de modes de réalisation de l'invention

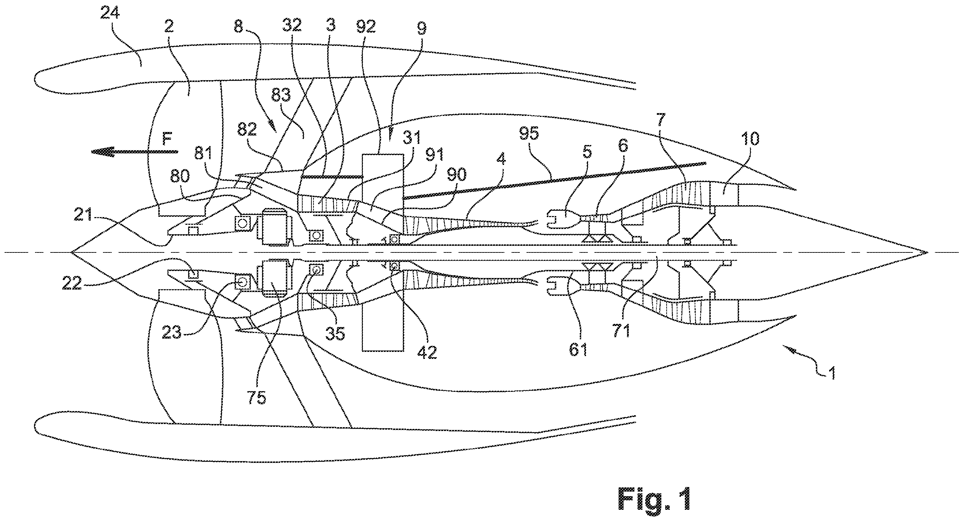

La figure 1 représente un turboréacteur 1 avec, d'amont en aval, une soufflante 2 et un générateur de gaz à double corps formé d'un premier compresseur 3, d'un second compresseur 4, d'une chambre de combustion 5, et de deux turbines en série 6 et 7. Le premier compresseur forme avec la turbine 7 à laquelle il est relié par un arbre de turbine 71, le corps à basse pression BP. Le second compresseur 4 forme avec la turbine 6 à laquelle il est relié par un arbre 61, le corps à haute pression HP. Les organes structuraux fixes, assurant la transmission des efforts du moteur à la suspension, comprennent : le carter d'entrée 8 situé à l'entrée du générateur de gaz entre la soufflante 2 et le compresseur BP 3, le carter inter-compresseurs 9 entre le compresseur BP 3 et le compresseur HP 4, ainsi que le carter d'échappement 10, à l'aval.

L'arbre 21 de la soufflante est monté à rotation dans deux paliers 22 et 23 dont le premier est par exemple à rouleaux et le second 23, près du carter, est par exemple à billes et forme un palier de butée axiale. L'arbre 21 est relié à l'arbre 71 de la turbine BP 7 au travers d'un réducteur de vitesse 75, à train d'engrenages épicycloïdal. Cet arbre 71 est solidaire du rotor du compresseur BP 3 qui est monté rotatif dans le carter d'entrée 8 par l'intermédiaire d'un palier par exemple à billes 35. Les trois paliers 22, 23 et 35 ainsi que le train d'engrenages 75 sont montés dans le moyeu 80 du carter d'entrée 8 et supportés par lui. Ainsi, le carter d'entrée reprend les efforts axiaux de l'arbre de soufflante avec le palier à billes 23 de l'arbre de soufflante et les efforts axiaux de l'arbre BP avec le palier à billes 35 de l'arbre BP.

Du moyeu 80 du carter d'entrée 8 s'étendent une pluralité de bras radiaux 81 qui traversent la veine du flux primaire et sont reliés entre eux par une pièce annulaire 82, intercalée entre la veine primaire et la veine secondaire. De cette pièce annulaire intercalaire 82 s'étendent une pluralité de bras radiaux 83 traversant la veine secondaire et reliant la pièce intercalaire 82 au carter de soufflante 24. Des moyens d'accrochage à la structure de l'aéronef sont éventuellement prévus dans le prolongement des bras 83 sur le carter de soufflante.

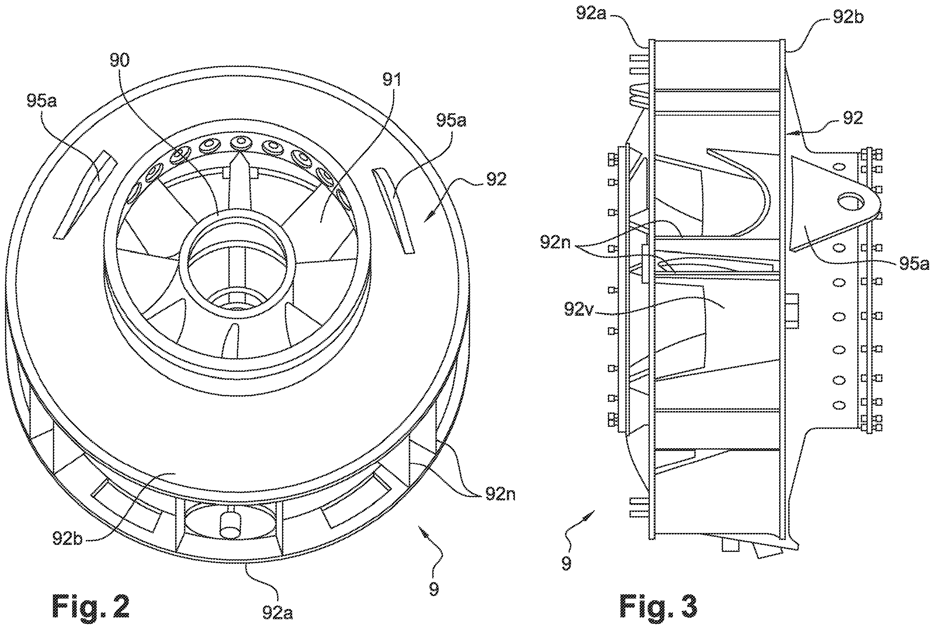

Le carter inter-compresseurs 9 est situé immédiatement en aval du compresseur BP 3 et en amont du compresseur HP 4. Il comprend un moyeu 90 traversé par l'arbre BP 71. Ce moyeu forme un support pour le palier 42 dans lequel vient prendre appui le tourillon d'extrémité du rotor du compresseur HP 4. Du moyeu 90 s'étendent une pluralité de bras radiaux 91 traversant la veine primaire. Les bras 91 sont reliés entre eux par une pièce annulaire 92. Cette pièce annulaire 92 du carter inter-compresseurs est le siège des attaches 95a pour les bielles 95 de reprise de poussée, agencées pour transmettre les efforts axiaux de poussée à la suspension du moteur. Un exemple de carter inter-compresseurs est décrit dans la demande de brevet FR A 3 007 458 au nom du présent déposant. Ce carter est reproduit sur les figures 2 et 3. On observe que la pièce annulaire 92 du carter 9 est formée principalement d'une virole 92v définissant la paroi radialement extérieure de la veine primaire à ce niveau, et de laquelle s'étendent deux flasques radiaux transversaux par rapport à l'axe du moteur, l'un amont 92a, l'autre aval 92b. Des nervures 92n axiales réparties autour de l'axe relient les deux parois 92a et 92b. De préférence, les nervures sont disposées dans le prolongement des bras radiaux 91.

Les efforts axiaux, flèche F, sur les aubes de la soufflante résultant de la rotation de la soufflante sont transmis à l'arbre 21 de la soufflante puis de l'arbre au moyeu 80 par le palier à billes 23 qui forme une butée axiale. Le chemin des efforts passe dans le carter d'entrée 8 par la pièce intercalaire 82, puis par le carter 31 du compresseur BP 3, la pièce annulaire 92 du carter inter-compresseurs 9 et les bielles 95 de reprise de poussée qui y sont attachées.

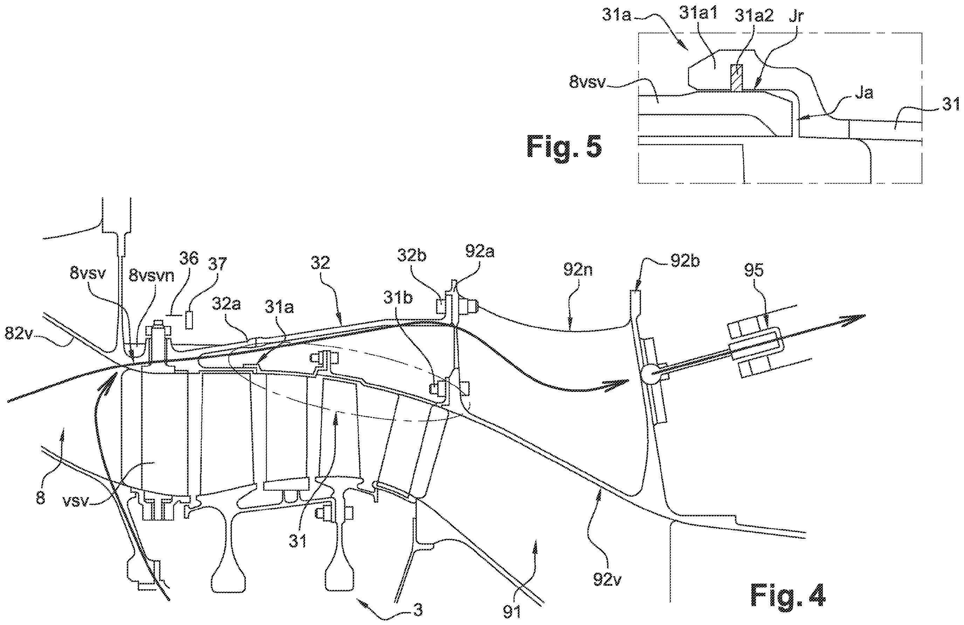

Conformément à l'invention, une virole structurale d'efforts 32 relie les deux pièces, intercalaire 82 et annulaire 92, des deux carters 8 et 9. La virole structurale d'efforts 32 est optionnellement rapportée sur le carter d'entrée 8. La figure 4 montre en coupe le compresseur BP entre le carter d'entrée 8 et le carter inter-compresseurs 9.

Le carter d'entrée présente une virole 8vsv dans le prolongement axial de la virole 82v. Les ailettes de stator VSV à calage variable sont montées pivotantes dans cette virole 8vsv et reliées à un anneau de synchronisation 37 par des leviers de commande 36 appropriés. La virole structurale 32 est soudée en 32a le long du bord aval de la virole 8vsv. En aval la virole 32 est boulonnée en 32b au flasque amont 92a du carter inter-compresseurs. Le flasque amont 92a, les nervures 92n permettant une reprise de la composante horizontale de la poussée de la soufflante, la virole 92v et le flasque aval 92b forment un ensemble rigide monobloc.

La virole 32 forme une liaison rigide entre les deux carters 8 et 9. De cette façon, les efforts axiaux exercés sur les paliers de butée 23 et 35 sont transmis via le carter d'entrée 8 au carter inter-compresseur 9 et aux bielles 95 de reprise de poussée.

Le carter 31 du compresseur forme l'enveloppe à l'intérieur de laquelle tournent les aubes mobiles du compresseur BP 3 ; à cet effet, il comprend les roues d'ailettes statoriques radiales, formant redresseurs, de guidage du flux d'air entre les étages du compresseur ainsi que les anneaux reliant lesdites. Le carter est selon le mode de réalisation représenté, boulonné en 31b, en aval, au flasque 92a du carter inter-compresseurs. Il est relié en amont à la virole 8vsv par une liaison flottante 31a. Un exemple de liaison flottante est visible en détail sur la figure 5. Le carter 31 est prolongé par une première bride axiale 31a1. La première bride est annulaire et recouvre une seconde bride correspondante formant le bord aval de la virole 8vsv.

Un jeu axial Ja est ménagé entre le carter 31 et la bride aval de la virole 8vsv. Un jeu radial Jr est également ménagé entre la bride axiale 31a1 et la virole 8vsv. Un joint d'étanchéité 31a2 est disposé entre les deux pièces de façon à empêcher les fuites d'air depuis la veine d'air primaire vers l'air ambiant. Le joint 31a2 a ici la forme d'un segment logé dans une rainure radiale interne de la bride axiale 31a1. La liaison 31a est flottante grâce aux jeux Ja et Jr.

Plus précisément on réalise un chevauchement de la bride interne formée par le bord aval de la virole 8vsv par une bride externe 31a1 pour conserver l'étanchéité de la veine tout en permettant un jeu axial. La bride externe réalise une marche pour assurer une continuité de la veine. La fente induite par la marche a une longueur limitée afin de limiter les pertes mais suffisante pour compenser les variations d'écartement entre le carter d'entrée et le carter inter-compresseurs. Comme la pression dans ce compresseur basse pression est encore faible par rapport aux pressions pouvant régner dans d'autre partie du moteur, comme le compresseur haute pression ou la turbine haute pression, les pertes induites par cette fente non débouchante sont assez faibles. Les écarts de température entre moteur chaud et froid sont dans cette zone assez faibles par rapport aux parties chaudes du moteur comme le compresseur haute pression ou la turbine haute pression, ce qui limite là aussi la taille nécessaire du jeu axial qui est ici de l'ordre de quelques millimètres.

Le jeu radial est déterminé de manière à, d'une part, être compensé efficacement par le joint d'étanchéité et limiter le volume de la cavité de la fente et d'autre part à compenser le désalignement entre le carter d'entrée et le carter inter-compresseurs. Le jeu radial est de l'ordre du millimètre. Le joint d'étanchéité compense le jeu radial Jr afin d'éviter les fuites d'air depuis la veine d'air primaire vers l'extérieur du compresseur, et en particulier vers le compartiment entourant le compresseur qui n'est pas adapté à recevoir ce flux. Ces éventuelles fuites causeraient également des pertes de rendement du compresseur.

Dans la mesure où les jeux sont conservés en fonctionnement du moteur aucune force ne transitera par cette liaison. Le carter 31 n'étant soumis à aucun effort parasite, il ne subira pas de déformation génératrice de perte de performance du compresseur.

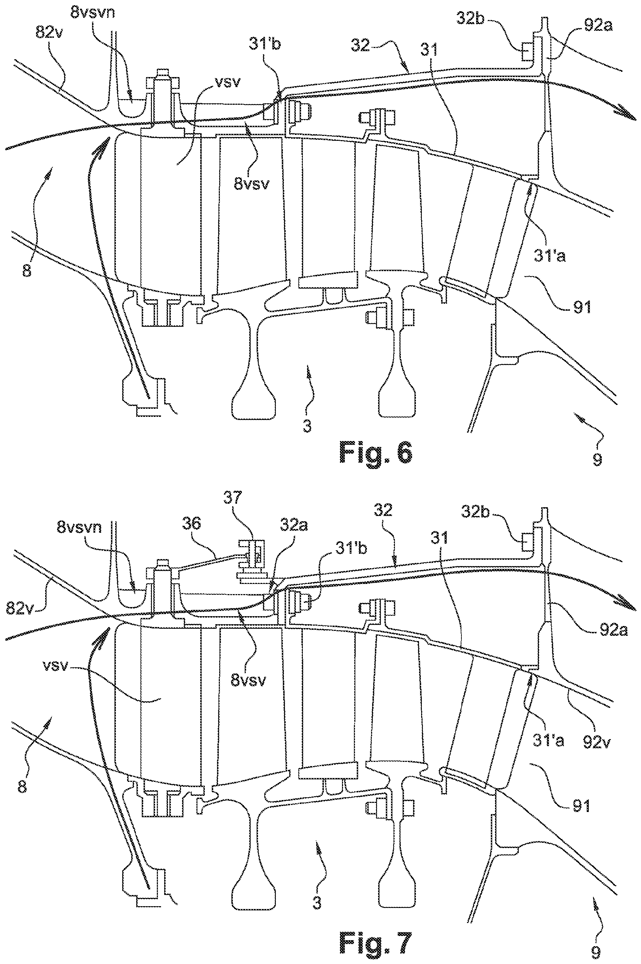

La figure 6 montre une variante de réalisation de carter flottant. La liaison flottante 31'a est, dans cette variante, prévue sur le bord aval du carter 31. L'agencement de la figure 5 est repris mutatis mutandis. La bride axiale du carter 31 (idem) entoure une bride axiale correspondante du carter inter-compresseurs 9 tout en ménageant un jeu axial et un jeu radial. Un joint d'étanchéité approprié évite les fuites à travers ces jeux. La liaison 31'b à l'amont est boulonnée.

La figure 7 montre une autre variante. Elle concerne la virole structurale 32. La liaison amont de la virole structurale à la virole 8vsv est boulonnée 32a au lieu d'être soudée. Le montage du carter 31 du compresseur BP 3 reste flottant avec une liaison boulonnée d'un côté, ici amont, et flottante de l'autre côté, ici aval.

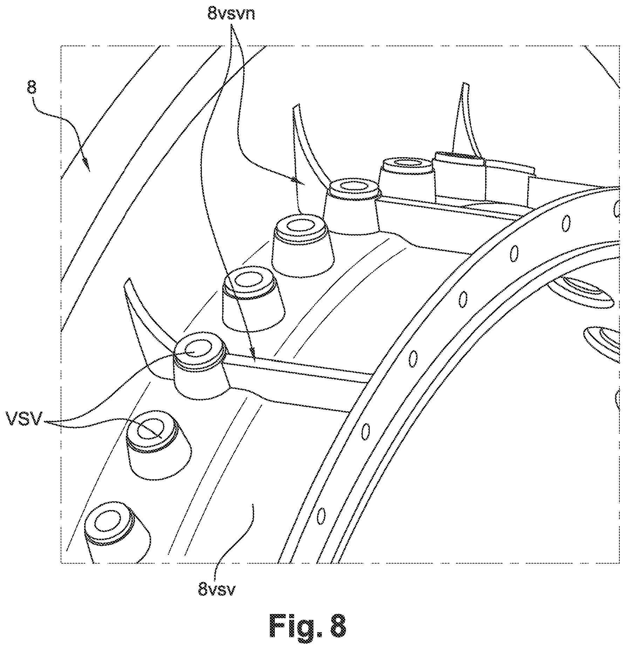

La figure 8 montre le détail de la virole 8vsv des ailettes VSV. Les ailettes VSV ne sont pas représentées, seuls les logements des pivots sont montrés. Afin de renforcer cette virole 8vsv, des nervures 8vsvn longitudinales sont disposées sur la face externe de la virole parallèlement à l'axe. Ces nervures contribuent à la transmission des efforts axiaux entre le carter d'entrée 8 et la virole structurale d'efforts 32.

## Revendications

1. Turboréacteur multiflux comprenant :
a. une soufflante amont (2) entraînée par un générateur de gaz,
b. le générateur de gaz comprenant un premier (3) et un second (4) compresseurs coaxiaux,
c. un carter d'entrée (8) formant support des rotors de la soufflante (2) et du premier compresseur (3),
d. un carter inter-compresseurs (9) en aval du carter d'entrée (8) et formant support du rotor du second compresseur (4),
e. des moyens (95a) d'attache pour des bielles (95) de reprise de poussée agencés sur le carter inter-compresseurs,
**caractérisé par le fait qu'**il comprend une virole (32) structurale d'efforts reliant une pièce annulaire (82) du carter d'entrée (8) à une pièce annulaire (92) du carter inter-compresseurs (9), les pièces annulaires (82, 92) des carters d'entrée et inter-compresseurs (8, 9) étant intercalées entre une veine primaire et une veine secondaire, le premier compresseur (3) comportant un carter (31) flottant, le carter (31) flottant formant une paroi extérieure de la veine primaire, le carter (31) flottant étant relié à l'un des deux carters d'entrée et inter-compresseurs (8, 9) avec une liaison (31a ; 31'a) flottante à jeu axial.

2. Turboréacteur selon la revendication 1, dont la virole (32) structurale d'efforts est rapportée soudée sur le carter (8) d'entrée et boulonnée sur le carter (9) inter-compresseurs.

3. Turboréacteur selon la revendication 1, dont la virole (32) structurale d'efforts est rapportée en étant boulonnée sur le carter (8) d'entrée et sur le carter (9) inter-compresseurs.

4. Turboréacteur selon l'une des revendications 1 à 3, dont le carter (8) d'entrée comprend une virole (8vsv) supportant des ailettes (VSV) de stator à calage variable, ladite virole (8vsv) étant pourvue de nervures (8vsvn) longitudinales de renfort.

5. Turboréacteur selon l'une des revendications 1 à 4, dont la liaison flottante est également à jeu radial.

6. Turboréacteur selon l'une des revendications 1 à 5, dont la liaison comprend une première bride recouvrant avec jeu une seconde bride.

7. Turboréacteur selon l'une des revendications 1 à 6, dont la liaison (31a ; 31'a) flottante comprend un joint (31a2) d'étanchéité isolant une veine primaire de l'air ambiant.

8. Turboréacteur selon l'une des revendications 1 à 6, dont le carter inter-compresseurs comprend deux flasques (92a, 92b) radiaux disposés transversalement par rapport à l'axe, lesdits moyens (95a) d'attache des bielles de reprise de poussée étant fixés à l'un des deux flasques.

9. Turboréacteur selon l'une des revendications précédentes, la soufflante étant entraînée par une turbine BP (7), comprenant un réducteur de vitesse (75) entre un arbre (71) de la turbine BP et la soufflante (2).

10. Turboréacteur selon l'une des revendications précédentes, dont au moins une partie des paliers supportant l'arbre de soufflante et l'arbre BP, respectivement, dans le carter d'entrée sont aptes à former des butées axiales.

## Patentansprüche

1. Mehrstrom-Turbostrahltriebwerk, umfassend:
a. einen vorgelagerten Bläser (2), der von einem Gasgenerator angetrieben wird,
b. der Gasgenerator einen ersten (3) und einen zweiten (4) koaxialen Verdichter umfasst,
c. ein Eingangsgehäuse (8), das eine Stütze der Rotoren des Bläsers (2) und des ersten Verdichters (3) bildet,
d. ein Zwischenverdichtergehäuse (9) nachgelagert vom Eingangsgehäuse (8) und bildend eine Stütze des Rotors des zweiten Verdichters (4),
e. Befestigungsmittel (95a) für Schubaufnahme-Kurbelstangen (95), die auf dem Zwischenverdichtergehäuse angeordnet sind,
**dadurch gekennzeichnet, dass** es eine strukturelle Spannhalterung (32) umfasst, die einen ringförmigen Teil (82) des Eingangsgehäuses (8) mit einem ringförmigen Teil (92) des Zwischenverdichtergehäuses (9) verbindet, wobei die ringförmigen Teile (82, 92) der Eingangsgehäuse und Zwischenverdichter (8, 9) zwischen einem Primärstrom und einem Sekundärstrom eingebaut sind, wobei der erste Verdichter (3) ein schwebendes Gehäuse (31) umfasst, wobei das schwebende Gehäuse (31) eine äußere Wand des Primärstroms bildet, wobei das schwebende Gehäuse (31) mit einem der zwei Eingangsgehäuse und Zwischenverdichter (8, 9) mit einer schwebenden Verbindung (31a; 31'a) mit axialem Spiel verbunden ist.

2. Turbostrahltriebwerk nach Anspruch 1, wobei die strukturelle Spannhalterung (32) geschweißt auf dem Eingangsgehäuse (8) und verbolzt auf dem Zwischenverdichtergehäuse (9) aufgesetzt ist.

3. Turbostrahltriebwerk nach Anspruch 1, wobei die strukturelle Spannhalterung (32) auf dem Eingangsgehäuse (8) und auf dem Zwischenverdichtergehäuse (9) verbolzt aufgesetzt ist.

4. Turbostrahltriebwerk nach einem der Ansprüche 1 bis 3, wobei das Eingangsgehäuse (8) eine Halterung (8vsv) umfasst, die Statorschaufeln (VSV) mit variabler Feststellposition stützt, wobei die Halterung (8vsv) mit längs gerichteten Verstärkungsrippen (8vsvn) versehen ist.

5. Turbostrahltriebwerk nach einem der Ansprüche 1 bis 4, wobei die schwebende Verbindung ebenfalls ein radiales Spiel aufweist.

6. Turbostrahltriebwerk nach einem der Ansprüche 1 bis 5, wobei die Verbindung einen ersten Flansch umfasst, der mit Spiel einen zweiten Flansch abdeckt.

7. Turbostrahltriebwerk nach einem der Ansprüche 1 bis 6, wobei die schwebende Verbindung (31a; 31'a) eine Dichtung (31a2) umfasst, die einen Primärstrom von der Umgebungsluft isoliert.

8. Turbostrahltriebwerk nach einem der Ansprüche 1 bis 6, wobei das Zwischenverdichtergehäuse zwei radiale Flansche (92a, 92b) umfasst, die quer mit Bezug auf die Achse angeordnet sind, wobei die Befestigungsmittel (95a) der Schubaufnahme-Kurbelstangen an einem der zwei Flansche befestigt ist.

9. Turbostrahltriebwerk nach einem der vorstehenden Ansprüche, wobei der Bläser von einer Niederdruckturbine (7) angetrieben wird, die ein Umsetzungsgetriebe (75) zwischen einer Welle (71) der Niederdruckturbine und dem Bläser (2) umfasst.

10. Turbostrahltriebwerk nach einem der vorstehenden Ansprüche, wobei mindestens ein Teil der Lager, die die Gebläsewelle bzw. die Niederdruckwelle im Eingangsgehäuse stützen, ausgelegt sind, um axiale Anschläge zu bilden.

## Claims

1. Turbojet engine comprising:
a. an upstream ducted fan (2) driven by a gas generator,
b. the gas generator comprising a first (3) and a second (4) coaxial compressors,
c. an inlet case (8) forming a support for the rotors of the ducted fan (2) and the first compressor (3),
d. an inter-compressor case (9) located downstream from the inlet case (8), and forming a support of the rotor of the second compressor (4),
e. attachment means (95a) for the thrust take-up rods (95) arranged on the inter-compressor case,
**characterised by** the fact that it comprises a stress structural shroud (32) connecting an annular part (82) of the inlet case (8) to an annular part (92) of the inter-compressor case (9), the annular parts (82, 92) of the inlet and inter-compressor cases (8, 9) being inserted between a primary flowpath and a secondary flowpath, the first compressor (3) comprising a floating case (31), the floating case (31) forming an outer wall of the primary flowpath, the floating case (31) being connected to one of the two inlet and inter-compressor cases (8, 9) with an axial backlash floating connection (31a; 31'a).

2. Turbojet engine according to claim 1, wherein the stress structural shroud (32) is welded to the inlet case (8) and bolted to the inter-compressor case (9).

3. Turbojet engine according to claim 1, wherein the stress structural shroud (32) is bolted to the inlet case (8) and bolted to the inter-compressor case (9).

4. Turbojet engine according to any of claims 1 to 3, wherein the inlet case (8) comprises a shroud (8vsv) that supports the variable-pitch stator vanes (VSV), said shroud (8vsv) having longitudinal reinforcement ribs (8vsvn).

5. Turbojet engine according to any of claims 1 to 4, wherein the floating connection also has a radial backlash.

6. Turbojet engine according to any of claims 1 to 5, wherein the connection comprises a first flange that covers, with clearance, a second flange.

7. Turbojet engine according to any of claims 1 to 6, wherein the floating connection (31a; 31'a) comprises a gasket (31a2) to insulate the primary flowpath from the ambient air.

8. Turbojet engine according to any of claims 1 to 6, wherein the inter-compressor case comprises two radial end-plates (92a; 92b) arranged transversally with respect to the axis, said attachment means (95a) of the thrust take-up rods are secured to one of the two end-plates.

9. Turbojet engine according to one of the previous claims, wherein the ducted fan is driven by a LP turbine (7) that comprises a speed reducer (75) between a shaft (71) of the LP turbine and the ducted fan (2).

10. Turbojet engine according to one of the previous claims, wherein at least a part of bearings supporting the shaft of the ducted fan and the LP shaft, respectively, in the inlet case, are configured to form axial bearings.
